# EUROPEAN PATENT APPLICATION

(11) **EP 0 664 951 A1**
(43) Date of publication of application: **02.08.1995**
(21) Application number: 95200173.3
(22) Date of filing: 25.01.1995
(51) Int. Cl.: A01K 5/02, A01K 7/06

(54) **Feeding trough**

(30) Priority: 28.01.1994 NL 9400129
(71) Applicant: Breedveld Trading, NL-5715 BK Lierop (NL)
(72) Inventor: Breedveld, Theodorus Martinus Adrianus, NL-5731 PP Mierlo (NL)
(74) Representative: Timmermans, Anthonius C.Th., Ir.

(57) **Abstract**

Known feeding troughs for allowing animals to control the supply of food and water themselves comprise a container for the storage of food, a dosage device, a drinking nipple and a food receptacle portion.

By allowing the dosage device to determine the supply of water in addition to that of food, an improved feeding trough is achieved.

## Description

The invention pertains to a feeding trough furnished with a container for the storage of food, a dosage device, a drinking nipple to be connected to a water supply and a food receptacle portion.

This known feeding trough for the feeding of, for example, pigs, is used, for example, in pig farms. Because animals can furnish themselves with food/water via the dosage device and the drinking nipple, a considerable cost-saving is obtained compared to the manual feeding of the animals.

A disadvantage of this known feeding trough is that the drinking nipple is situated in the food receptacle portion, whereby the demands required of this drinking nipple are high in connection with the animals' hitting their heads against the drinking nipple. A further disadvantage of this feeding trough is that, seeing as how the drinking nipple is situated in the food receptacle portion, said drinking nipple becomes rapidly soiled (with mould, among other things) and must be regularly cleaned. Yet another disadvantage of this known feeding trough is that, in a group of pigs that has to use the same feeding trough, the smaller pigs are shoved away from the feeding trough by the larger pigs before they have eaten and drunk sufficiently.

It is a goal of the invention to provide a feeding trough which does not suffer from the aforementioned disadvantages. To this end, a feeding trough according to the invention is characterised in that the dosage device is connected to the drinking nipple for the combined supply of food and water to the food receptacle portion.

As a result of the combined provision of food and water by one and the same dosage device, the feeding trough according to the invention enjoys the following advantages:

Because the use of a drinking nipple directly above the food receptacle portion can be abandoned, this is of advantage with respect to hygiene - for example, no mould-formation occurs. As a result of this, the feeding trough can be cleaned more easily. Because the drinking nipple does not come into contact with the pigs, a lighter (cheaper) drinking nipple will suffice. As a result of this, the drinking nipple suffers from less wear and tear and requires less maintenance. By merely selecting the correct drinking nipple, it is possible to sell the feeding trough with a certain desired mix-ratio of food/water. If desired, the amount of water used can be hereby reduced, so that less dung is produced. Seeing as how the pigs no longer have any choice in the matter, they will consequently drink less water. Because food and water fall with a single action, the pigs are provided with water and food twice as fast. This gives good results, for example, in the case of piglets and smaller pigs. They are often shoved away or bitten away from the feeding trough, whereby, with the known feeding troughs, they can have problems with feeding-duration and consequently do not put on sufficient weight.

An embodiment of a feeding trough according to the invention, provided by way of example, is characterised in that the dosage device contains a dosage brace or valve for dosing the food, which dosage brace or valve is additionally adapted to operate the drinking nipple.

A further embodiment of a feeding trough according to the invention, provided by way of example, is characterised in that the drinking nipple is located at the bottom of the container and can be connected to the water supply via a tube and is operated with the aid of the dosage brace or valve.

A further embodiment of a feeding trough according to the invention, provided by way of example, is characterised in that the drinking nipple is located at the top of the container, to be connected to the water supply, and can be operated with the dosage brace or valve with the aid of a tube through the container.

An advantage hereof is that the drinking nipple can be more easily exchanged.

A further advantage of this embodiment is that there is no water in the tube in the stationary state, whereby condensation build-up in the container, is avoided and no food encrustations upon the wall of the tube takes place.

A further embodiment of a feeding trough according to the invention, provided by way of example, is characterised in that the dosage brace contains a lever for the activation of the drinking nipple via the tube.

A further embodiment of a feeding trough according to the invention, provided by way of example, is characterised in that the tube contains a push rod for the activation of the drinking nipple.

The invention will now be further elucidated, by way of example, on the basis of the accompanying figures. To this end:
Figure 1 depicts a cross-section of a feeding trough according to the invention,
Figure 2 depicts the portion of the feeding trough pertaining to the drinking nipple in more detail; and
Figure 3 depicts the portion pertaining to the dosage device in more detail.

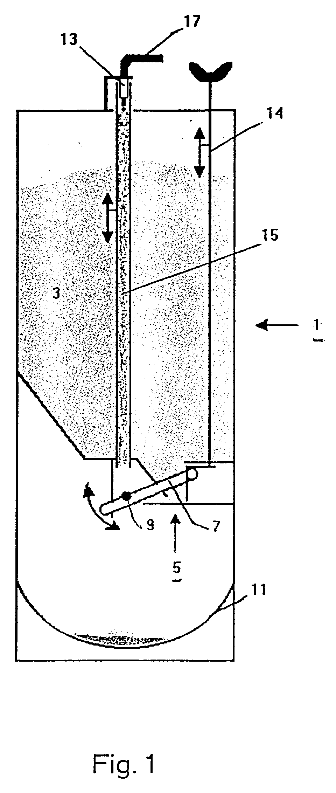

Figure 1 depicts a feeding trough containing a container 3 for the storage of food for, for example, pigs. Further, the feeding trough contains a dosage device 5 for the supply of food and water (under the control of the pigs themselves) to the food receptacle portion 11.

The dosage device contains a dosage brace 7 which is operated by the pig's heads. In the embodiment provided by way of example, a push rod 9 for the activation of a drinking nipple 13 is located on the dosage brace, which drinking nipple 13 is located above the container 3 and is connected to a water supply 17. The drinking nipple 13 is connected to a tube 15 for the supply of the water supplied by the drinking nipple to the food receptacle portion 11.

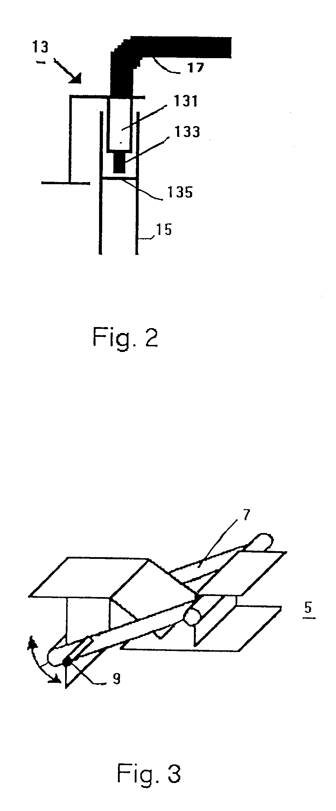

The tube also serves to activate the drinking nipple; namely, the tube 15 is pushed upwards by means of the push rod 9 at the end of the reach of the dosage brace 7, which (top of the tube) activates the drinking nipple, as is shown in more detail in figure 2.

The feeding trough further contains an adjustment organ 14, 19 for the adjustment of the quantity of food to be supplied to the food receptacle portion 11 with a single sweep of the dosage brace. This adjustment organ can be embodied as, for example, a thread-end 17 and a wing nut 19. A so-called valve can also be employed instead of a dosage brace.

Figure 2 shows the drinking nipple 13 in more detail. The drinking nipple contains a drinking-nipple body 131 which is connected to the water supply 17 and to a drinking-nipple pin 133, which drinking-nipple pin opens and closes the drinking nipple. Figure 2 also shows the top portion of the tube 15 with a push rod 135 located in the tube, which rod, upon the rising of the tube, depresses the drinking-nipple pin, whereby water flows in the tube. When the tube goes back down, the drinking-nipple pin closes the drinking nipple downwards. It is also possible to employ a drinking nipple which only supplies water after the tube has moved downwards.

Figure 3 shows an embodiment, provided by way of example, of the dosage device, in more detail. The dosage device contains the dosage brace 7 which is moved by the animals in a manner as indicated by the arrows. With a single upward motion of the dosage brace and its subsequent fall into its resting position, the animal in question is supplied with both food and water. The dosage device provides the desired amount of food and, by means of the push rod 9, the desired quantity of water is also supplied. It is also possible that the dosage brace itself operates, via, for example, the tube 15, the drinking nipple.

It will be obvious that the feeding trough can be modified in many of its minor details without deviating from the intended scope of the invention. For example, if desired, the drinking nipple can be placed at the bottom of the tube 15. Furthermore, the dosage brace or valve and the push rod (if present) can be adjusted according to the desired application, for example, to vary the ratio of food/water.

## Claims

1. Feeding trough comprising a container for the storage of food, a dosage device, a drinking nipple to be connected to a water supply and a food receptacle portion, characterised in that the dosage device is connected to the drinking nipple for the combined supply of food and water to the food receptacle portion.

2. Feeding trough according to claim 1, characterised in that the dosage device contains a dosage brace or valve for dosing the food, which dosage brace or valve is additionally adapted to operate the drinking nipple.

3. Feeding trough according to claim 2, characterised in that the drinking nipple is located at the bottom of the container and can be connected to the water supply via a tube and is to be operated with the aid of the dosage brace or valve.

4. Feeding trough according to claim 2, characterised in that the drinking nipple is located at the top of the container, to be connected to the water supply, and can be operated by the dosage brace or valve with the aid of a tube through the container.

5. Feeding trough according to claim 4, characterised in that the dosage brace contains a lever for the activation of the drinking nipple via the tube.

6. Feeding trough according to claim 5, characterised in that the tube contains a push rod for the activation of the drinking nipple.
